**Europäisches Patentamt**

**European Patent Office**

**Office européen des brevets**

(19)

(11) Veröffentlichungsnummer: **0 055 343**

**A1**

# EUROPÄISCHE PATENTANMELDUNG

(12)

(21) Anmeldenummer: **81108237.9**

(22) Anmeldetag: **12.10.81**

(51) Int. Cl.³: **H 04 Q 1/14**

(30) Priorität: **29.12.80 DE 3049364**

(43) Veröffentlichungstag der Anmeldung:
**07.07.82 Patentblatt 82 27**

(84) Benannte Vertragsstaaten:
**AT BE CH DE FR LI**

(71) Anmelder: **SIEMENS AKTIENGESELLSCHAFT Berlin und München**
**Postfach 22 02 61**
**D-8000 München 22(DE)**

(72) Erfinder: **Buchberger, Georg**
**Drygalski-Allee 118**
**D-8000 Müchen 71(DE)**

(54) **Verteiler für eine kleine Fernsprechvermittlungsanlage.**

(57) Die im Verteiler benötigten Bauelemente z.B. zum Schutz gegen Überspannungen sind in Baugruppen (4) der Verteilers (1) zusammengefaßt. Jede der Baugruppen (4) ist einem steckbaren Modul der Vermittlungsanlage zugeordnet. Sie enthält jeweils sämtliche für die angeschlossene Gruppe von ankommenden Leitungen (2) erforderlichen Bauelemente. Die interne Verdrahtung der Baugruppen (4) erfolgt durch gedruckte Leiterplatten, die auch die Kontaktelemente für die ankommenden Leitungen (2) sowie die Kontakte für die abgehenden Leitungen (3) und die Bauelemente tragen.

EP 0 055 343 A1

SIEMENS AKTIENGESELLSCHAFT
Berlin und München

-1-

0055343

Unser Zeichen
VPA 80 P 6 2 6 8 E

Verteiler für eine kleine Fernsprechvermittlungsanlage

Die Erfindung bezieht sich auf einen Verteiler für eine
kleine Fernsprechvermittlungsanlage, bei der die Schaltungsfunktionen in einschiebbaren Modulen realisiert sind.

Durch die Deutsche Offenlegungsschrift 29 01 678 ist ein
Verteiler für eine derartige Nebenstellenanlage bekannt
geworden, der mit Kontaktelementen für ankommende und für
abgehende, zur Vermittlungsanlage führende Leitungen aufweist. Außerdem sind Bauelemente zum Schutz gegen Überspannung zum Leitungsabschluß und zur Amtsumschaltung bei
Stromausfall vorgesehen. Diese Bauelemente sowie die ihnen
zugeordneten Kontakte sind in flachen Baugruppen zusammegefaßt, die auf einer Montageplatte des Verteilers befestigt sind. Die interne Verdrahtung des Verteilers erfolgt
über steckbare Rangierleitungen. In jeder Baugruppe sind
jeweils ausschließlich Bauelemente gleicher Funktion, also
zum Schutz gegen Überspannungen zusammengefaßt. Bei einer
Änderung an der Vermittlungsanlage z.B. bei einer Erweiterung der angeschlossenen Teilnehmerzahl müssen jeweils
mehrere zusätzliche Baugruppen mit den erforderlichen
Funktionen angebracht und verdrahtet werden.

Der Erfindung liegt die Aufgabe zugrunde, den Verdrahtungsaufwand zu verringern sowie die Herstellung und Montage des Verteilers sowie die erforderlichen Veränderungen und Erweiterungen zu vereinfachen.

Diese Aufgabe wird durch die Erfindung gemäß Anspruch 1
gelöst. Durch die Zusammenfassung unterschiedlicher Bau-

Khr 1 Gru / 22.12.1980

elemente auf einer Baugruppe ist es möglich, alle für z.B. für eine Gruppe von Teilnehmern erforderlichen Bauelemente in einer Baugruppe zusammemzufassen. Durch die Zuordnung der Baugruppen zu den Modulen der Vermittlungsanlage kann diese Verbindung durch gebündelte Leitungen z.B. von Stekkerkabeln hergestellt werden. Die Verdrahtung der verschiedenen Bauelemente untereinander erfolgt innerhalb der Baugruppe, die komplett vorgefertigt werden kann. Da diese Verdrahtung nicht mehr geändert werden muß kann für die interne Verdrahtung einer Baugruppe eine gedruckte Leiterplatte verwendet werden. Da jede Baugruppe alle erforderlichen Verbindungen enthält müssen bei der Verdrahtung des Verteilers nur noch die ankommenden und abgehenden Leitungen an die Baugruppen angeschlossen werden.

Die Baugruppen sind sämtlich baugleich ausführbar, so daß sie auf Grund der hohen Stückzahl billiger hergestellt werden können. Im Verteiler können sie an den dafür vorgesehenen Stellen eng aneinandergereiht werden, ohne daß auf ihre Reihenfolge Rücksicht genommen zu werden braucht. Auch bei nachträglichen Rangierarbeiten müssen lediglich z.B. die ankommenden Leitungen an andere Kontaktelemente der Baugruppen angeschlossen werden. Ein weiterer Vorteil der Erfindung besteht darin, daß bei einer Erweiterung der Anlage minimale Verdrahtungs- und Montagearbeiten ausgeführt werden müssen. Es sind nämlich lediglich neue Baugruppen anzubringen und mit den ankommenden und abgehenden Leitungen zu verbinden. Das bedeutet, daß jeweils nur so viele Baugruppen verwendet wie tatsächlich benötigt werden. Eine Vorleistung an nicht benötigten Baugruppen mit den verschiedenen Bauelementen ist nicht erforderlich.

Vorteilhafte Weiterbildungen der Erfindung sind in den Ansprüchen 2 bis 9 gekennzeichnet:

Die Weiterbildung nach Anspruch 2 ermöglicht einen kompak-

0055343

ten und kostengünstigen Aufbau der Baugruppe. Durch die Weiterbildung nach Anspruch 3 ist es mit geringem Aufwand möglich, die zur Vermittlungsanlage führenden Leitungen steckbar auszubilden. Da jeweils eine Baugruppe des Verteilers einem Modul der Vermittlungsanlage zugeordnet ist, können die Verbindungsleitungen in Kabeln gebündelt werden.

Durch die Verwendung der Montageplatte nach Anspruch 4 können die Baugruppen in einfacher Weise im Verteiler befestigt werden. Durch ihre Anordnung nebeneinander sind alle Baugruppen gleichzeitig zugänglich, was für die Umrangierung der ankommenden Leitungen von Vorteil ist. Durch die Erfindung lassen sich die Baugruppen an der Montageplatte regelmäßig anordnen. Nach Anspruch 5 geschieht dies in zwei parallelen Reihen. Diese weisen einen Abstand zueinander auf, der eine Verdrahtungsgasse für die ankommenden Leitungen bildet. Das bedeutet, daß die Leitungen räumlich getrennt von den Baugruppen verlegt werden können. Dies wiederum verbessert die Übersichtlichkeit und Zugänglichkeit. Da nun die Anschlußelemente für die ankommenden Leitungen nicht mehr an beliebigen Stellen des Verteilers angeordnet sind und durch die Zusammenfassung in einer Verdrahtungsgasse ist es möglich, auf Rangierdrähte zu verzichten, die eine zusätzliche Schnittstelle mit zusätzlichen Kontakten erfordern. Nach Anspruch 6 ist es möglich, die in Vielfachkabeln ankommenden Leitungen unmittelbar an die Baugruppen anzuschließen. Dies geschieht dadurch, daß das Kabel entsprechend lang abgemantelt wird und daß die Leitungen von ihren gemeinsamen Festlegestellen aus einzeln verlegt sind.

Die Weiterbildung nach Anspruch 7 erleichtert das Umrangieren der ankommenden Leitungen, da sie anhand ihrer Anordnung im Sortierkamm leicht identifiziert werden können. Das gleiche gilt bei der Erweiterung der Anlage für die bis dahin noch nicht benötigten Reserveleitungen.

Die Weiterbildung nach Anspruch 8 wird durch die Zusammenfassung der elektrischen Leitungen in den Verdrahtungsgassen begünstigt, da auch die abgehenden Leitungen an den einander abgewandten Seiten der Baugruppen zusammengefaßt geführt werden können. Durch die Verwendung des Klappdeckels als zusätzliche Montageplatte wird der Verteiler erheblich kompakter. Bei einer Anbringung des Verteilers an einer Wand kann sein Flächenbedarf nahezu halbiert werden. Die Vergrößerung seiner Tiefe ist verhältnismäßig gering und bringt ohnehin keinen Nachteil bezüglich des Raumbedarfs mit sich. Durch die Anordnung der Verlegebahn senkrecht zur Schwenkachse kommt es beim Zusammenklappen des Verteilers zu keiner seitlichen Verschiebung der Leitungen. Die Anordnung der Schwenkachse nach Anspruch 9 bringt es mit sich, daß die Leitungen im wesentlich senkrecht verlaufen, was ihre Führung innerhalb der Verdrahtungsgasse erleichtert.

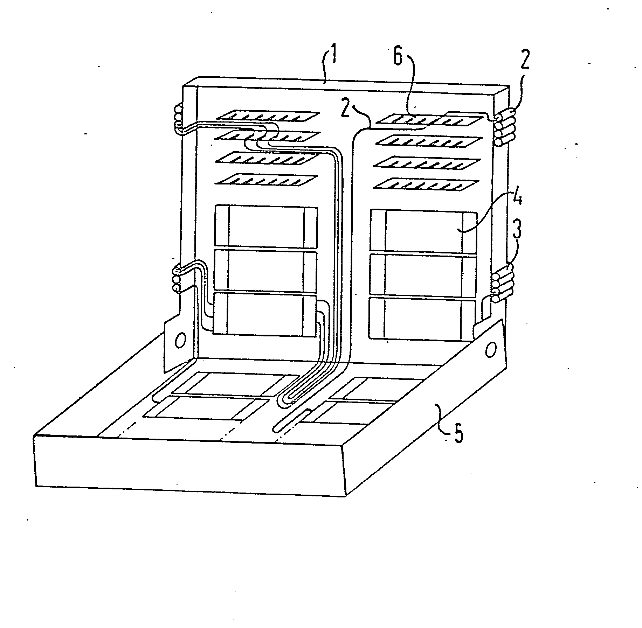

Im folgenden wird die Erfindung anhand eines in der Zeichnung dargestellten Ausführungsbeispieles näher erläutert. Die abgebildete Figur zeigt schematisiert in perspektivischer Darstellung einen Verteiler 1 für eine kleine Fernsprechvermittlungsanlage. An den Verteiler 1 sind von den Teilnehmern ankommenden Leitungen 2 und zur Vermittlungsanlage führende abgehende Leitungen 3 angeschlossen. Der Verteiler 1 ist mit flachen elektrischen Baugruppen 4 versehen, in denen jeweils die für eine Gruppe von ankommenden Leitungen erforderlichen Bauelemente des Verteilers zusammengefaßt sind. Die nicht dargestellten Bauelemente können z.B. zum Schutz gegen Überspannungen, zum Leitungsabschluß und zur Amtsumschaltung bei Stromausfall dienen. Die Baugruppen 4 sind außerdem mit nicht näher dargestellten Kontaktelementen für die ankommenden Leitungen 2 und Kontakten für die abgehenden Leitungen 3 versehen. Jeweils eine Baugruppe 4 ist elektrisch einem steckbaren Modul der nicht dargestellten Vermittlungsanlage fest zugeordnet. Die abgehenden Leitungen können daher in Steckerkabeln gebündelt sein. Die ankommenden Leitungen 2 sind ebenfalls in Kabeln an den Verteiler herangeführt. Diese sind aber so weit abgemantelt, daß die losen Adernenden von den gemeinsamen Festlegestellen aus bis zum entferntesten Kontaktelement der Baugruppen 4 reichen. Dadurch ist es möglich, die ankommenden Leitungen 2 unmittelbar an die Baugruppen 4 anzuschließen. Da jede einzelne der ankommenden Leitungen 2 die Maximallänge hat, ist eine spätere beliebige Rangierung möglich.

Die Baugruppen 4 sind typgleich ausgebildet und in getrennten Reihen nebeneinander auf Montageplatten angeordnet. Eine Teilmenge der Baugruppen 4 ist am feststehenden Teil des Verteilers angeordnet. Die übrigen Baugruppen 4 sind am als zusätzliche Montageplatte ausgebildeten schwenkbaren Deckel 5 des Verteilers befestigt. Der Zwischenraum zwischen den Baugruppenreihen dient als Verdrahtungsgasse für die ankommenden Leitungen 2. Auf den einander abgewandten Seiten der Baugruppen 4 ist zu den Seitenwänden ein Abstand belassen, der der geordneten Verlegung der abgehenden Leitungen 3 dient. Die Verdrahtungsgassen verlaufen senkrecht zur waagerechten Schwenkachse des Deckels 5, so daß beim Öffnen und Schließen des Verteilers die Verdrahtung nur wenig beeinflußt wird.

In der Nähe des Eintritts der ankommenden Leitungen 2 sind Sortierkämme 6 angebracht, in denen die ankommenden Leitungen 2 nach einer festgelegten Reihenfolge fixiert sind. Dies trifft auch für die noch nicht benötigten Reserveleitungen zu. Die Sortierkämme 6 erleichtern das Identifizieren und Auffinden von Leitungen bei Änderungs- oder Erweiterungsarbeiten.

9 Patentansprüche
1 Figur

0055343

VPA 80 P 6268 E

## Patentansprüche

1. Verteiler für eine kleine Fernsprechvermittlungsanlage, insbesondere Nebenstellenanlage, bei der die Schaltungfunktionen in einschiebbaren Modulen realisiert sind, wobei der Verteiler mit Kontaktelementen für ankommende und Kontakten für zur Vermittlungsanlage führende abgehende Leitungen sowie mit Bauelementen z.B. zum Schutz gegen Überspannungen, zum Leitungsabschluß und/oder zur Amtsumschaltung bei Stromausfall bestückbar ist und wobei der Verteiler Baugruppen mit den Bauelementen und/oder Kontaktelementen bzw. Kontakten aufweist, d a d u r c h g e k e n n z e i c h n e t , daß jeweils eine Gruppe von ankommenden Leitungen (2) mit Kontaktelementen einer der Baugruppen (4) verbunden ist, daß jede Baugruppe (4) sämtliche für die jeweilige Gruppe von ankommenden Leitungen erforderlichen Bauelemente enthält und daß die von den Kontakten der Baugruppe (4) abgehenden Leitungen (3) mit einem der Module der Vermittlungsanlage verbunden sind.

2. Verteiler nach Anspruch 1, d a d u r c h g e k e n n z e i c h n e t , daß jede Baugruppe eine gedruckte Leiterplatte aufweist, die die Kontaktelemente, Kontakte und Bauelemente trägt.

3. Verteiler nach Anspruch 1 oder 2, d a d u r c h g e k e n n z e i c h n e t , daß die Kontakte für die zur Vermittlungsanlage abgehenden Leitungen (3) als Steckkontaktflächen der Leiterplatte ausgebildet sind.

4. Verteiler nach Anspruch 1, 2 oder 3, d a d u r c h g e k e n n z e i c h n e t , daß die Leiterplatten an zumindest einer Montageplatte (z.B. 5) des Verteilers (1) nebeneinander befestigt sind.

5. Verteiler nach Anspruch 4, d a d u r c h g e k e n n -

0055343

zeichnet, daß die Baugruppen (4) in zwei parallelen Reihen und die Kontaktelemente für die ankommenden Leitungen (2) auf der einander zugewandten Seite der Baugruppenreihen angeordnet sind und daß die ankommenden Leitungen (2) zwischen den beiden Baugruppenreihen verlegt sind.

6. Verteiler nach einem der vorhergehenden Ansprüche, dadurch gekennzeichnet, daß die ankommenden Leitungen (2) eine Länge aufweisen, die ausreicht, um sie an das von der gemeinsamen Festlegestelle entfernteste Kontaktelement anzuschließen.

7. Verteiler nach Anspruch 6, dadurch gekennzeichnet, daß der Verteiler (1) an den Festlegestellen der ankommenden Leitungen (2) mit Sortierkämmen (6) versehen ist, in denen sowohl die an die Kontaktelemente der Baugruppen (4) angeschlossenen wie auch die noch nicht benötigten Reserveleitungen in einer festgelegten Reihenfolge fixiert sind, und daß die ankommenden Leitungen (2) von den Sortierkämmen (6) aus lose verlegt sind.

8. Verteiler nach Anspruch 4, 5 oder 7, dadurch gekennzeichnet, daß der schwenkbare Deckel des Verteilers als zusätzliche Montageplatte (5) für die Baugruppen (4) ausgebildet ist, daß die Baugruppen (4) bei aufgeklapptem Deckel in der Verlängerung der beiden Baugruppenreihen auf der festen Montageplatte angeordnet sind und daß die Verlegebahn der ankommenden Leitungen (2) zwischen den beiden Baugruppenreihen senkrecht zur Schwenkachse des Deckels verläuft.

9. Verteiler nach Anspruch 8, dadurch gekennzeichnet, daß die Schwenkachse des Deckels horizontal gerichtet ist.

1/1

**Europäisches Patentamt**

# EUROPÄISCHER RECHERCHENBERICHT

Nummer der Anmeldung

EP 81 10 8237

| EINSCHLÄGIGE DOKUMENTE | | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| A | DE - A - 2 846 825 (TELEFONBAU UND NORMALZEIT) <br><br> * Seite 4, Zeile 25 bis Seite 6, Zeile 17; Figur * | 1-4 | H 04 Q 1/14 |
| A | BELL LABORATORIES RECORD, Nr. 45, Februar 1967 MURRAY HILL D. BAKER "Electronic switching for small PBXs" Seiten 49 bis 56 <br><br> * Figur Seite 51 * | 1-4 | **RECHERCHIERTE SACHGEBIETE (Int. Cl.³)** |
| D,A | DE - B - 2 901 678 (SIEMENS A.G.) <br><br> * Spalte 4, Zeile 10 bis Spalte 6, Zeile 22, Figuren * | 1 | H 04 Q 1/14 <br> 1/10 |

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Den Haag | 08-04-1982 | KEPPENS |

EPA form 1503.1 08.78